# FASCICULE DE BREVET EUROPEEN

(11) **EP 1 679 437 B1**
(45) Date de publication et mention de la délivrance du brevet: **07.07.2010**
(21) Numéro de dépôt: 06300009.5
(22) Date de dépôt: 05.01.2006
(51) Int. Cl.: F02M 61/14, F16F 15/02, F16F 7/00

(54) **Dispositif d'amortissement de vibrations, ainsi que moteur à combustion interne comprenant un tel dispositif**
Einrichtung zur Dämpfung von Schwingungen sowie mit einer solchen Einrichtung ausgestatteter Verbrennungsmotor
Device for damping vibrations and combustion engine fitted with such a device

(30) Priorité: 11.01.2005 FR 0500268
(43) Date de publication de la demande: 12.07.2006
(73) Titulaire: Peugeot Citroën Automobiles SA, 78943 Vélizy-Villacoublay Cedex (FR)
(72) Inventeur: Sauvage, Olivier, F-92210 Saint Cloud (FR); Burry, Pierre, F-75011 Paris (FR); Perronnet, Cyril, F-92250 La Garenne-Colombes (FR); Eickhoff, Jean-Mard, F-75012 Paris (FR); Auger, Jean-Marc, F-92350 Le Plessis Robinson (FR)
(74) Mandataire: Ménès, Catherine

(56) Documents cités:
- EP-A- 1 262 652
- US-A- 2 215 743
- US-A- 2 585 107
- US-A1- 2002 139 352
- US-A1- 2004 040 543
- US-B1- 6 427 667
- PATENT ABSTRACTS OF JAPAN vol. 2002, no. 03, 3 avril 2002 (2002-04-03) & JP 2001 329931 A (NISSAN MOTOR CO LTD), 30 novembre 2001 (2001-11-30)
- PATENT ABSTRACTS OF JAPAN vol. 016, no. 311 (M-1277), 8 juillet 1992 (1992-07-08) & JP 04 086371 A (YAMAHA MOTOR CO LTD), 18 mars 1992 (1992-03-18)

## Description

La présente invention concerne un moteur à combustion interne tel que défini dans le préambule de la revendication 1. Un tel moteur est connu du US-A-2002/0139352.

La présente invention trouve une application particulièrement efficace dans le domaine de la conception de groupes moto-propulseurs de véhicules automobiles, ces groupes moto-propulseurs étant, dans le contexte donné, des appareils soumis à des contraintes thermiques et susceptibles de recevoir des vibrations et de les transmettre. Les vibrations sont engendrées par un premier appareil en tant que source de vibrations, par exemple un injecteur de carburant, qui est monté sur un second appareil, le groupe moto-propulseur.

La présente invention propose un dispositif d'amortissement destiné à amortir les vibrations engendrées par les injecteurs ou par tout autre appareil engendrant des vibrations.

Lors de la conception d'un véhicule automobile, il est de tradition depuis longtemps de prévoir des moyens destinés à empêcher la génération de vibrations ou, pour le moins, destinés à les amortir. Un exemple typique sont les amortisseurs de vibrations que l'on utilise dans la suspension du bloc moteur dans le châssis du véhicule. Outre les amortisseurs hydrauliques, on utilise à cet effet des blocs de caoutchouc.

Toutefois, les vibrations de la grande mécanique d'un véhicule automobile ne sont pas les seules sources de bruit vers lesquels les constructeurs de véhicules automobiles se tournent de plus en plus. Les approches récentes pour diminuer le bruit qu'un véhicule automobile en général et qu'un groupe moto-propulseur en particulier génère, sont de plus en plus dirigées vers les sources mêmes des bruits. En effet, les approches les plus efficaces en vue de réduire le bruit et les vibrations, consistent à agir au plus près de la source, voire directement sur la cause du bruit lorsque cela est possible.

Un des bruits les plus prononcés d'un groupe moto-propulseur dans un véhicule automobile est le bruit généré par les injecteurs, et cela particulièrement dans les moteurs à allumage par compression.

Les injecteurs, qui ne sont qu'une source parmi d'autres sources de bruit et de vibrations dans un véhicule automobile, sont destinés à être montés, pour exercer leurs fonctions, sur un second appareil, en l'occurrence un bloc moteur pourvu d'au moins une chambre de combustion dans laquelle un tel injecteur doit injecter un carburant. Une autre source de vibration est, par exemple, la pompe d'un lave-glace. Toutefois, en comparant ces deux exemples de sources de vibrations, on remarque la difficulté particulière à laquelle le concepteur d'un appareil doit faire face, lorsqu'il essaie de réduire les vibrations : il s'agit des contraintes thermiques et mécaniques auxquelles des appareils tels les injecteurs de carburant et leur environnement de montage sont exposés.

Les injecteurs sont d'ailleurs source de vibrations à double titre. D'abord, les injecteurs sont source de vibrations en raison de ses parties mobiles internes qui sont activées pour la préparation consécutive des portions de carburant destinées à être injectées dans la ou les chambres de combustion suivant le régime du moteur. Ces pièces sont en général sollicitées en mouvement translatoire et oscillatoire et les vibrations consécutives de l'injecteur produisent un rayonnement acoustique directement audible.

Toutefois, les injecteurs sont ensuite source de vibrations en raison des efforts dynamiques qu'ils produisent sur la culasse, à laquelle ils sont fixés, et sur l'ensemble du moteur pendant la préparation et l'injection de portions de carburant. Chaque changement de pression, et notamment chaque décharge de pression, engendre des vibrations. Ces vibrations se propagent par voie solide dans le moteur puis produisent un rayonnement acoustique audible.

La nature double en tant que source vibro-acoustique a été reconnue déjà dans l'état de la technique et a donné lieu à des solutions agissant plutôt au premier niveau ou plutôt au second niveau.

Ainsi, le document US-A-5 636 827 décrit un moyen pour réduire l'impact des vibrations engendrées à l'intérieur d'un injecteur. Cette solution consiste à assouplir l'aiguille de l'injecteur, notamment à l'aide d'encoches, afin de diminuer la raideur des impacts que l'aiguille engendre en fonctionnement sur la buse de l'injecteur. Cette solution se limite à l'injecteur lui-même et ne prend pas en compte l'implantation de l'injecteur dans la culasse d'un moteur thermique.

Un autre exemple d'un moyen d'assouplissement des vibrations est décrit dans le document EP-A-1 460 262. Ce document enseigne un moyen dit d'amortissement harmonique, réalisé en matière plastique ou en métal, qui est disposé à l'intérieur de l'injecteur, par exemple sous la forme d'un insert tubulaire disposé à l'intérieur du tube d'entrée de l'injecteur. Cette solution se limite à l'injecteur lui-même et ne prend pas en compte l'implantation de l'injecteur dans la culasse d'un moteur thermique. En outre, le taux d'amortissement apporté par les matériaux préconisés par cette solution est généralement faible.

L'environnement de l'injecteur est en revanche pris en compte dans l'enseignement du document US-A-6 382 532. Ce document enseigne des intercalaires destinés à être intégrés entre différentes parties d'un injecteur. Toutefois, les matériaux proposés dans ce document pour obtenir les effets d'un amortissement, sont des viscoélastiques classiques. De tels matériaux sont inutilisables à des températures élevées comme on le rencontre dans la partie inférieure d'un injecteur, c'est-à-dire à proximité de la chambre de combustion et notamment en contact avec la culasse.

Les effets mécaniques et le principe de fonctionnement des injecteurs ne pouvant être changés, il s'agit alors de diminuer, voire de faire disparaître au moins le rayonnement acoustique des structures mises en vibration par l'injecteur en fonctionnement.

Le but de l'invention est de proposer un dispositif qui permette d'amortir des vibrations et du bruit générés par un premier appareil, source de vibrations, tel qu'un injecteur, destiné à être monté sur un second appareil, soumis à des contraintes thermiques et susceptible de recevoir et transmettre des vibrations.

Le but de la présente invention est atteint avec un dispositif d'amortissement de vibrations tel que défini dans la partie caractérisante de la revendication 1.

La présente invention propose ainsi un traitement permettant d'amortir principalement le rayonnement acoustique de structures mises en vibration par un premier appareil, source de vibrations, par exemple un injecteur en fonctionnement. Le dispositif de l'invention intervient alors à l'interface entre les deux appareils montés l'un sur l'autre. Selon l'exemple choisi, il s'agit de l'interface entre un injecteur, ou des injecteurs, et une culasse sur laquelle ils sont montés.

Le dispositif de l'invention apporte un traitement amortissant local à l'interface entre les injecteurs et la culasse sur laquelle ils sont montés. Grâce à cette disposition de l'invention, on crée la possibilité de dissiper utilement, notamment très près de la source des vibrations, de l'énergie vibratoire. L'énergie vibratoire ainsi dissipée n'est donc plus disponible pour exciter la culasse par transmission de vibrations.

De plus, les moyens utilisés sont spécialement étudiés au vu des contraintes thermiques et mécaniques dont il s'agit de tenir compte.

En effet, en ayant choisi des moyens de découplage de transmission de vibrations réalisés en un matériau de friction apte à former des plaquettes de frein, on emploie un matériau bien adapté à l'environnement difficile, que constitue un bloc moteur et notamment une culasse et le reste de la base moteur sur lesquels les injecteurs sont montés. Un tel matériau de friction est par exemple un composite à matrice organique.

Les contraintes thermiques et thermomécaniques que l'on rencontre à l'interface entre un injecteur et la culasse sur laquelle elle est montée, sont assez importantes. A titre d'exemple, les précontraintes statiques exercées selon l'axe de l'injecteur, afin d'assurer l'étanchéité du joint entre l'injecteur et la culasse, sont de l'ordre de 10 000 N. De même, la pression à l'intérieur d'un cylindre peut atteindre 160 bar. Enfin, l'environnement du nez de l'injecteur, qui est en contact avec les gaz de combustion, peut atteindre des températures de l'ordre de 300°C.

En choisissant les matériaux de friction, apte par exemple à former des plaquettes ou des patins de frein, on dispose à la fois d'un matériau mécaniquement résistant, capable de subir les contraintes thermiques élevées énoncées ci avant et doté d'un pouvoir amortissant intéressant.

Les moyens de découplage sont avantageusement conformés soit pour amortir des vibrations axiales, soit pour amortir des vibrations transversales.

Selon le principe de la présente invention de traiter les nuisances au plus proche de leurs sources, il convient en particulier d'utiliser des moyens de découplage telles des rondelles destinées à être disposées à l'interface entre le premier appareil source et le second appareil récepteur.

La présente invention permet ainsi de traiter les vibrations engendrées par l'injecteur en insérant à l'interface entre l'injecteur et la culasse, un matériau dissipatif en ce qui concerne l'énergie vibratoire mais résistant aux contraintes thermomécaniques existant sur cette interface particulière. En choisissant comme matériau des composites à matrice organique, fabriqués sous la forme de rondelles ou de manchons ou de toute autre forme adéquate, on peut localiser ce traitement près de la source et sur de petites surfaces, par opposition à des surfaces grandes ou des corps intercalaires de certaines dimensions. On concentre ainsi les effets exercés sur des parties précises du montage du premier appareil source de vibrations sur le second, et on l'utilise en même temps pour deux matériaux. Par ailleurs, les matériaux de friction permettent une fabrication précise des moyens de découplage, ce qui contribue positivement à leur utilisation à des endroits par définition serrée, et on agit très près de la source de bruit ou de vibrations.

En ce qui concerne la forme et l'emplacement des moyens de découplage selon l'invention, il est concevable que les moyens de découplage comprennent un manchon destiné à recevoir au moins une partie du premier appareil, source de vibrations, ce manchon étant alors intercalé entre le premier appareil et un évidemment pratiqué dans un second appareil destiné à recevoir le premier appareil. Selon une autre variante, les moyens de découplage comprennent un élément d'amortissement plat destiné à être disposé au fond d'un évidement du second appareil dans lequel le premier appareil doit être logé.

Le but de l'invention est par ailleurs atteint par un moteur à combustion à interne, à injection, comprenant au moins un injecteur de carburant monté sur un bloc cylindre du moteur, ce moteur comprenant un dispositif d'amortissement avec les caractéristiques décrites ci avant.

Le but de l'invention est aussi atteint avec un véhicule automobile comprenant un dispositif d'amortissement tel que décrit plus haut.

D'autres caractéristiques et avantages de la présente invention ressortiront de la description ci-après d'un mode de réalisation du dispositif de l'invention et de variantes de celui-ci. La description est faite en référence aux dessins dans lesquels :
- la figure 1 montre une partie d'une culasse sur laquelle est fixée un injecteur à l'aide d'une bride ;
- la figure 2 montre une autre culasse sur laquelle un injecteur est fixé à l'aide d'une fourchette ;
- la figure 3 montre, en une coupe simplifiée, un injecteur fixé par une bride sur une culasse d'un moteur à combustion interne ; et
- la figure 4 montre, en une couple simplifiée, un injecteur monté sur une culasse à l'aide d'un dispositif d'amortissement selon l'invention.

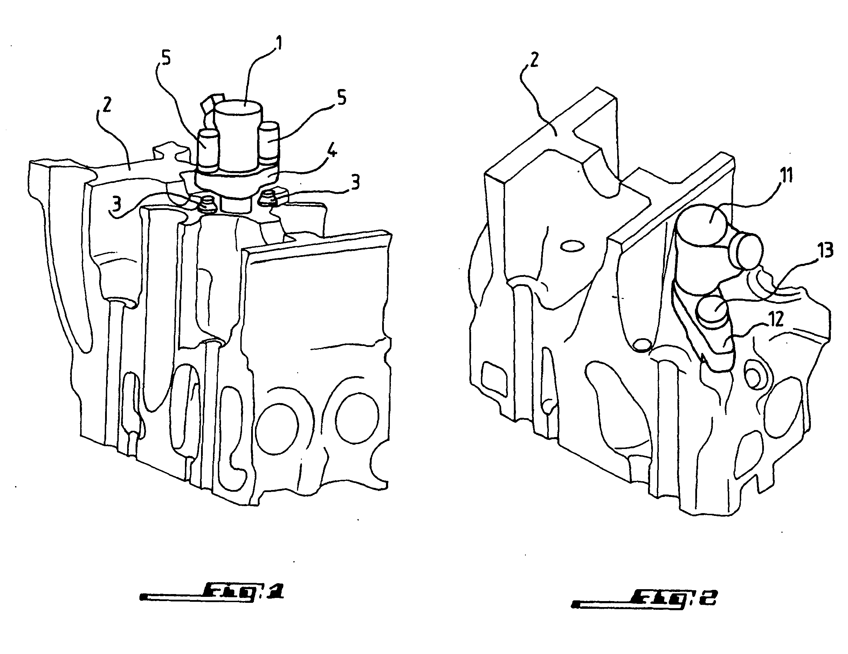

Les figures 1 et 2 montrent, à titre d'exemple pour un agencement d'un premier appareil, source de vibrations, sur un second appareil soumis à des contraintes thermiques et susceptible de recevoir et de transmettre les vibrations, un injecteur de carburant monté sur une culasse et fixé sur celle-ci à l'aide d'une bride telle que représentée sur la figure 1 ou à l'aide d'une fourchette telle que représentée sur la figure 2.

Dans le premier cas, un injecteur 1 est monté sur une culasse 2 sur deux colonnettes 3 solidaires de la culasse 2. Pour fixer l'injecteur 1 sur la culasse 2, on utilise une bride 4 qui enferme la tête de l'injecteur et l'appuie sur les colonnettes 3. La bride 4 est immobilisée sur les colonnettes 3 à l'aide de deux écrous 5 exerçant l'appui nécessaire sur la bride 4 afin que cette dernière maintienne l'injecteur 1 fermement sur la culasse 2.

Dans le second cas, un injecteur 11 est monté sur une culasse 2 à l'aide d'une fourchette 12. La fourchette 12 est vissée sur la culasse 2 moyennant un écrou 13 engagé sur une tige filetée solidaire de la culasse 2. La fourchette 12 est disposée de manière à entourer partiellement, par une de ses deux extrémités opposées, la tête de l'injecteur 11 et de prendre appui, par l'autre de ses deux extrémités opposées, sur la culasse 2. La tige filetée et l'écrou 13 sont disposés entre les deux extrémités opposées de la fourchette 12 et traversent la fourchette 12. Selon une variante, la fourchette 12 peut également être immobilisée sur la culasse 2 à l'aide d'une vis s'engageant dans un taraudage approprié de la culasse. En serrant l'écrou 13, on exerce une force de levier sur la fourchette, grâce à laquelle la fourchette appuie sur la tête de l'injecteur 11 et l'immobilise sur la culasse 2.

Quel que soit le principe de fixation choisi ou, autrement dit, que l'injecteur soit fixé sur la culasse selon l'un ou l'autre des deux exemples génériques de fixation représentés sur les figures 1 ou 2 ou que l'injecteur soit fixé d'une autre manière encore, il est constant que l'injecteur est en contact direct avec la culasse et que toutes les vibrations engendrées par l'injecteur peuvent être transmises ou rayonnées sous forme de bruit sans atténuation particulière ni amortissement.

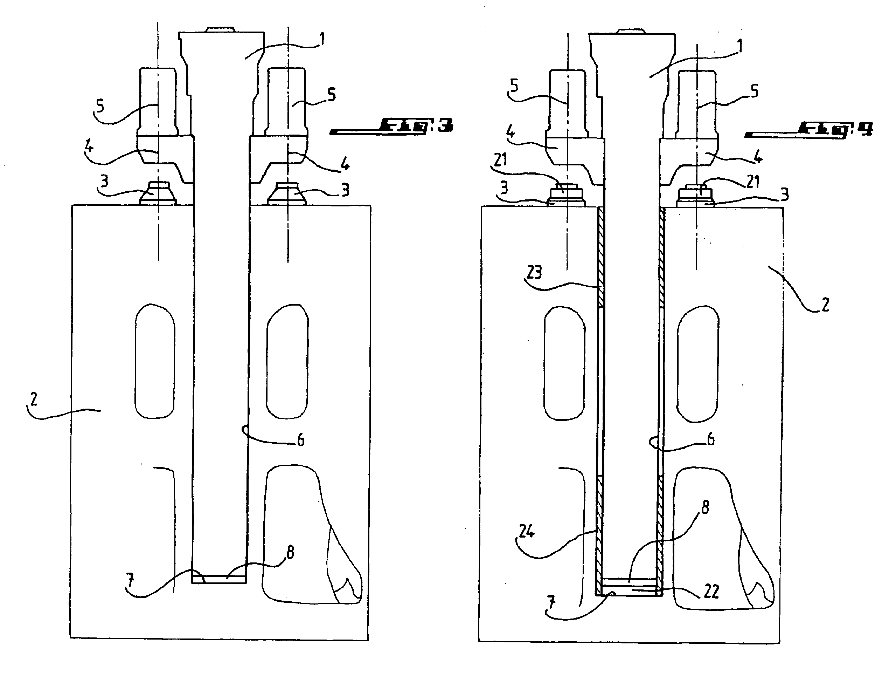

La figure 3 reprend le principe de fixation représenté sur la figure 1 sous la forme d'une coupe simplifiée. On voit sur la figure 3 un injecteur 1 logé dans un évidement 6 pratiqué dans la culasse 2. L'injecteur 1 s'appuie principalement sur le fond 7 de l'évidement 6. Pour assurer l'étanchéité de la chambre de combustion alimentée par l'injecteur 1, un joint métallique 8 est disposé sur le fond de l'évidement 6. L'injecteur 1 prend appui par ailleurs sur les colonnettes 3 sur lesquelles il est appuyé à l'aide de la bride 4. L'appui est exercé à l'aide des écrous 5 engagés sur la partie filetée des colonnettes 3. L'espacement axial entre la bride 4 et les colonnettes 3, tel qu'il est représenté sur la figure 3, n'est pas dessiné à l'échelle par rapport à une épaisseur de la bride 4, mais a été exagéré pour des raisons de dessin.

Comme cela est déjà indiqué plus haut, l'injecteur représenté sur les dessins n'est qu'un exemple parmi d'autres d'un premier appareil, source de vibrations, utilisé dans le domaine des véhicules automobiles et qui est monté sur un second appareil, soumis à des contraintes thermiques et susceptible de recevoir et de transmettre les vibrations, par exemple le groupe moto-propulseur représenté sur les dessins par la culasse 2. Selon la figure 3, le premier appareil 1 est en appui sur le second appareil 2 principalement en trois points, à savoir sur les deux colonnettes 3 et sur le fond 7 des évidements 6. Ceci signifie que toutes les vibrations engendrées à l'intérieur du premier appareil 1 sont reçues par le second appareil 2 à ces trois points de contact et que, le cas échéant, le second appareil 2 transmet ces vibrations ailleurs, par exemple, à travers la suspension du groupe moto-propulseur, sur la carrosserie du véhicule, ou bien encore à l'air ambiant. Les vibrations engendrées par le premier appareil 1, qui se font aussi remarquer à l'extérieur par leur rayonnement direct, sont transmises de diverses manières sur le second appareil 2, et généralement amplifiées.

Lorsque le corps du premier appareil 1 présente une forme et des dimensions telles qu'il épouse, au moins sur une partie, les parois de l'évidemment 6 dans laquelle le premier appareil est logé, il y a un chemin pour la transmission des vibrations émanent du premier appareil 1 sur le second appareil 2. Ce chemin est formé par les parties de la paroi du corps du premier appareil 1 et de la paroi de l'évidement 6 qui sont en contact intime les unes avec les autres. Selon la présentation de la figure 3, le corps de l'injecteur 1 épouse entièrement l'évidement 6.

Selon l'agencement représenté sur la figure 4, le montage du premier appareil 1 sur le second appareil 2, en l'occurrence la fixation d'un injecteur 1 dans une culasse 2, est modifiée par l'ajout des éléments d'un dispositif d'amortissement de vibrations selon l'invention. En effet, on retrouve l'assemblage de la figure 3 dans la mesure où un premier appareil 1 est inséré dans un évidement 6 du second appareil, le premier appareil 1 prenant en particulier appui sur le fond 7 de l'évidement 6. Le premier appareil 1 prend par ailleurs appui sur les colonnettes 3, et cela moyennant une bride 4, moyennant laquelle le premier appareil 1 est immobilisé par l'action de fortes contraintes dans l'évidement 6. La bride 4 est appuyée sur les colonnettes 3 à l'aide d'écrous 5 engagés sur une partie filetée des colonnettes 3. Comme sur la figure 3, la figure 4 représente l'espacement axial entre la bride 4 et les colonnettes 3 avec un espacement exagéré pour des raisons de dessin.

Pour amortir les vibrations engendrées par le premier appareil, on utilise deux types d'éléments formant ensemble le dispositif d'amortissement de vibrations selon l'invention. Le premier type d'élément consiste en des rondelles ou joints 21, 22 disposés de manière à amortir les vibrations axiales du premier appareil 1. Les joints 21, ou rondelles 21, sont réalisés en un matériau de friction tel que celui que l'on utilise, par exemple, pour les plaquettes de frein. Les rondelles 21 sont disposées sur les colonnettes 3 de manière à être interposées entre la tête d'appui des colonnettes 3 et la bride 4. Un autre joint est celui référencé 22. Il est disposé au fond de l'évidement 6, c'est-à-dire entre le joint métallique 8 et le fond 7 de l'évidement 6. Ainsi, grâce à cette disposition de l'invention, les éléments du dispositif d'amortissement de vibrations selon l'invention opposent une résistance à la propagation vibratoire et amortissent les vibrations susceptibles d'être transmises, dans une direction essentiellement axiale par rapport à l'étendue longitudinale du premier appareil 1.

Des premiers appareils source de vibrations tels que des injecteurs, n'engendrant pas uniquement des vibrations axiales, mais aussi des vibrations susceptibles d'être répandues sensiblement transversalement par rapport à l'étendue longitudinale du premier appareil 1, des moyens de découplage, formant des éléments du dispositif selon l'invention, spécialement conformé pour amortir des vibrations transversales, sont prévus. Selon l'agencement représenté sur la figure 4, il s'agit de deux manchons 23, 24 réalisés en un matériau de friction tel que celui que l'on utilise pour les plaquettes de frein, disposés respectivement au fond de l'évidement 6 et à l'entrée de l'évidement 6. Il va sans dire que, sans sortir du principe de la présente invention, il est également concevable d'utiliser un seul manchon et que celui-ci peut, le cas échéant, revêtir l'évidement 6 entièrement.

Il va également sans dire que, sans sortir du principe de la présente invention, il est concevable d'intervertir la position des rondelles 8 et 22, notamment pour des raisons d'efficacité de l'étanchéité à assurer entre l'intérieur des cylindres du moteur à explosion et l'extérieur, au niveau du trou de passage du nez de l'injecteur. Toujours sans sortir du principe de la présente invention, il est concevable de procéder à différents empilements de rondelles des types 8 et 22, notamment à un empilement d'au moins deux paires d'éléments dont chaque paire d'éléments est formée par un joint métallique 8 et un élément d'amortissement 22, le joint 8 étant au-dessus ou en dessous de l'élément 22.

## Revendications

1. Moteur à combustion interne, à injection, comprenant au moins un injecteur de carburant monté sur une culasse du moteur, comportant un dispositif d'amortissement de vibrations pour le montage d'un injecteur (1) sur une culasse (2), soumise à des contraintes thermiques et susceptible de recevoir et de transmettre les vibrations, **caractérisé en ce qu'**il comprend des moyens de découplage de transmission (22, 23, 24) des vibrations réalisés en un matériau de friction apte à former une plaquette de frein.

2. Moteur selon la revendication 1, **caractérisé en ce que** les moyens de découplage (22) sont conformés pour amortir des vibrations axiales.

3. Moteur selon la revendication 1 **caractérisé en ce que** les moyens de découplage (23, 24) sont conformés pour amortir des vibrations transversales.

4. Moteur selon l'une quelconque des revendications 1 à 3, **caractérisé en ce que** les moyens de découplage comprennent des rondelles (21) destinées à être disposées entre un élément de fixation (4) de l'injecteur (1) et la culasse (2).

5. Moteur selon l'une quelconque des revendications 1 à 3, **caractérisé en ce que** les moyens de découplage comprennent un manchon (23, 24) destiné à recevoir au moins une partie de l'injecteur (1) et à être intercalé entre l'injecteur (1) et la paroi d'un trou ou évidement (6) pratiqué dans la culasse (2) et destiné à recevoir l'injecteur (1).

6. Moteur selon l'une quelconque des revendications 1 à 5, **caractérisé en ce que** les moyens de découplage comprennent un élément d'amortissement plat (22) destiné à être disposé au fond d'un évidement (6) de la culasse(2) dans lequel 'injecteur (1) doit être logé.

7. Moteur selon la revendication 6, **caractérisé en ce que** les moyens de découplage comprennent en outre un joint métallique (8) disposé sur l'élément d'amortissement (22) posé au fond de l'évidement (6).

8. Moteur selon la revendication 6, **caractérisé en ce que** les moyens de découplage comprennent en outre un joint métallique (8) disposé sous l'élément d'amortissement (22) posé au fond de l'évidement (6).

9. Moteur selon la revendication 7 ou 8, **caractérisé en ce que** les moyens de découplage comprennent au moins deux paires d'élément dont chaque paire d'éléments est formée par un joint métallique (8) et un élément d'amortissement (22).

10. Véhicule automobile comportant un moteur selon l'une quelconque des revendications précédentes.

## Claims

1. An injection internal combustion engine, comprising at least one fuel injector mounted on a cylinder head of the engine, comprising a device for damping vibrations for the mounting of an injector (1) on a cylinder head (2), subjected to thermal stresses and capable of receiving and transmitting the vibrations, **characterized in that** it comprises means for decoupling the transmission (22, 23, 24) of the vibrations, made of a friction material suited to form a brake pad.

2. The engine according to Claim 1, **characterized in that** the decoupling means (22) are shaped to damp axial vibrations.

3. The engine according to Claim 1, **characterized in that** the decoupling means (23, 24) are shaped to damp transverse vibrations.

4. The engine according to any of Claims 1 to 3, **characterized in that** the decoupling means comprise washers (21) intended to be arranged between a fixing element (4) of the injector (1) and the cylinder head (2).

5. The engine according to any of Claims 1 to 3, **characterized in that** the decoupling means comprise a sleeve (23, 24) intended to receive at least a part of the injector (1) and to be intercalated between the injector (1) and the wall of a hole or recess (6) formed in the cylinder head (2) and intended to receive the injector (1).

6. The engine according to any of Claims 1 to 5, **characterized in that** the decoupling means comprise a flat damping element (22) intended to be arranged at the bottom of a recess (6) of the cylinder head (2) in which the injector (1) is to be housed.

7. The engine according to Claim 6, **characterized in that** the decoupling means further comprise a metallic joint (8) arranged on the damping element (22) placed at the bottom of the recess (6).

8. The engine according to Claim 6, **characterized in that** the decoupling means further comprise a metallic joint (8) arranged beneath the damping element (22) placed at the bottom of the recess (6).

9. The engine according to Claim 7 or 8, **characterized in that** the decoupling means comprise at least two pairs of elements, each pair of elements of which is formed by a metallic joint (8) and a damping element (22).

10. An automobile vehicle comprising an engine according to any of the preceding claims.

## Patentansprüche

1. Verbrennungsmotor mit Einspritzung, der mindestens einen Kraftstoffeinspritzer aufweist, der auf einem Zylinderkopf des Motors montiert ist, der eine Dämpfvorrichtung für Schwingungen zur Montage eines Einspritzers (1) auf einem Zylinderkopf (2) aufweist, die Wärmebelastungen ausgesetzt ist und Schwingungen aufnehmen und übertragen kann, **dadurch gekennzeichnet, dass** sie Mittel zum Entkoppeln (22, 23, 24) des Übertragens von Schwingungen aufweist, die aus einem Reibungsmaterial hergestellt sind, das einen Bremsbelag bilden kann.

2. Motor nach Anspruch 1, **dadurch gekennzeichnet, dass** die Mittel zum Entkoppeln (22) ausgebildet sind, um axiale Schwingungen zu dämpfen.

3. Motor nach Anspruch 1, **dadurch gekennzeichnet, dass** die Mittel zum Entkoppeln (23, 24) ausgebildet sind, um Querschwingungen zu dämpfen.

4. Motor nach einem der Ansprüche 1 bis 3, **dadurch gekennzeichnet, dass** die Mittel zum Entkoppeln Unterlegscheiben (21) aufweisen, die dazu bestimmt sind, zwischen einem Befestigungselement (4) des Einspritzers (1) und dem Zylinderkopf (2) angeordnet zu werden.

5. Motor nach einem der Ansprüche 1 bis 3, **dadurch gekennzeichnet, dass** die Mittel zum Entkoppeln einen Stutzen (23, 24) aufweisen, der dazu bestimmt ist, mindestens einen Teil des Einspritzers (1) aufzunehmen und zwischen dem Einspritzer (1) und der Wand einer Bohrung oder Aussparung (6), die in dem Zylinderkopf (2) eingerichtet und zum Aufnehmen des Einspritzers (1) bestimmt ist, eingefügt zu werden.

6. Motor nach einem der Ansprüche 1 bis 5, **dadurch gekennzeichnet, dass** die Mittel zum Entkoppeln ein flaches Dämpfelement (22) aufweisen, das dazu bestimmt ist, auf dem Grund einer Aussparung (6) des Zylinderkopfs (2), in der der Einspritzer (1) untergebracht werden soll, abgelegt zu werden.

7. Motor nach Anspruch 6, **dadurch gekennzeichnet, dass** die Mittel zum Entkoppeln ferner eine Metalldichtung (8) aufweisen, die auf dem Dämpfelement (22), das auf dem Grund der Aussparung (6) abgelegt ist, angeordnet ist.

8. Motor nach Anspruch 6, **dadurch gekennzeichnet, dass** die Mittel zum Entkoppeln ferner eine Metalldichtung (8) aufweisen, die unter dem Dämpfelement (23), das auf dem Grund der Aussparung (6) abgelegt ist, angeordnet ist.

9. Motor nach Anspruch 7 oder 8, **dadurch gekennzeichnet, dass** die Mittel zum Entkoppeln mindestens zwei Paare Elemente aufweisen, wobei jedes Paar Elemente aus einer Metalldichtung (8) und einem Dämpfelement (22) ausgebildet ist.

10. Kraftfahrzeug, das einen Motor nach einem der vorhergehenden Ansprüche aufweist.
